# EUROPÄISCHE PATENTSCHRIFT

(11) **EP 2 623 202 B1**
(45) Veröffentlichungstag und Bekanntmachung des Hinweises auf die Patenterteilung: **18.07.2018**
(21) Anmeldenummer: 12153208.9
(22) Anmeldetag: 31.01.2012
(51) Int. Cl.: B01L 3/02, B01L 7/00, G01N 35/10

(54) **VERFAHREN ZUM ERWÄRMEN EINES FLÜSSIGKEITSVOLUMENS IN EINER BEHEIZTEN PIPETTIERNADEL, PIPETTIERVORRICHTUNG UND AUTOMATISCHES ANALYSEGERÄT**
METHOD FOR HEATING A VOLUME OF LIQUID IN A HEATED PIPETTING NEEDLE, PIPETTING DEVICE AND AUTOMATED ANALYTICAL DEVICE
PROCÉDÉ DESTINÉ À CHAUFFER UN VOLUME DE LIQUIDE DANS UNE AIGUILLE DE PRÉLÈVEMENT PAR PIPETTE CHAUFFÉE, DISPOSITIF DE PIPETAGE ET APPAREIL D'ANALYSE AUTOMATIQUE

(43) Veröffentlichungstag der Anmeldung: 07.08.2013
(73) Patentinhaber: Siemens Healthcare Diagnostics Products GmbH, 35041 Marburg (DE)
(72) Erfinder: Michels, Thorsten, 64521 Gross-Gerau (DE); Selvi, Ayhan, 65812 Bad Soden am Taunus (DE); Wiedekind-Klein, Alexander, 61449 Steinbach (DE)

(56) Entgegenhaltungen:
- EP-A1- 1 859 870
- EP-A1- 2 145 949
- WO-A1-2009/035981
- DE-A1- 4 423 267
- US-B1- 6 576 477

## Beschreibung

Die Erfindung liegt auf dem Gebiet der automatischen oder halbautomatischen Analysegeräte und betrifft eine Pipettiervorrichtung sowie ein Verfahren zum Erwärmen eines Flüssigkeitsvolumens in einer beheizten Pipettiernadel.
Pipettiervorrichtungen werden in automatischen oder halbautomatischen Analysegeräten für die klinische Diagnostik, Biotechnik, Umweltanalytik oder Substanzanalyse eingesetzt. In derartigen Analysegeräten werden analytische Verfahren durchgeführt, indem flüssige Proben und/oder Reagenzien zu einem Reaktionsansatz vermischt werden und die Reaktion quantitativ gemessen wird, beispielsweise photometrisch. Mit Hilfe von automatisch gesteuerten Pipettiervorrichtungen, die üblicherweise wie eine Saugpipette funktionieren, werden genau dosierte Volumina von flüssigen Proben oder Reagenzien aus Vorratsbehältern in Reaktionsbehälter transferiert.
Viele Geräte sind in der Lage eine Vielzahl von Proben aufzunehmen und eine Vielzahl von Reagenzien vorrätig zu halten. Aus Haltbarkeitsgründen werden insbesondere die Reagenzvorräte in der Reagenzstation auf eine Temperatur unterhalb der Zimmertemperatur gekühlt. Für die Durchführung eines analytischen Verfahrens, insbesondere wenn es auf enzymatischen Reaktionen beruht, ist es jedoch erforderlich, dass eine bestimmte Temperatur im Reaktionsansatz herrscht. Aus diesem Grund sind seit langem temperierte Pipettiernadeln im Einsatz, die es ermöglichen, die Temperatur der zu transferierenden Flüssigkeit vor Abgabe in den Reaktionsbehälter auf den gewünschten Wert anzupassen. Beheizte Pipettiervorrichtungen sind zum Beispiel in EP-A1-2145949, EP-A2-0496962 oder US 2008/0044311 A1 beschrieben.

In modernen Analysegeräten können viele verschiedene Teste durchgeführt werden. Das bedeutet, dass die Pipettiervorrichtungen in der Lage sein müssen, unterschiedliche Volumina verschiedener gekühlter Reagenzien pipettieren und dabei auf die gewünschte Reaktionstemperatur oder eine Temperatur nahe der gewünschten Reaktionstemperatur erwärmen zu können.

In bekannten Analysegeräten werden Pipettiervorrichtungen eingesetzt, die konstant dieselbe Solltemperatur aufweisen sollen. In Geräten zur Analyse von Blut-, Plasma- oder Serumproben ist die Zieltemperatur für die zu pipettierenden Reagenzien üblicherweise 37 °C. Mit Hilfe von Thermosensoren wird die Temperatur der Pipettiernadel gemessen. Nur wenn die Temperatur der Pipettiernadel die festgelegte Sollwerttemperatur unterschreitet, wird die Heizvorrichtung aktiviert.

In der Praxis ist es problematisch sicherzustellen, dass unterschiedliche Flüssigkeitsvolumina gleichermaßen auf dieselbe Zieltemperatur, z.B. auf 37 °C erwärmt werden. Größere Volumina werden unter Umständen nicht ausreichend erwärmt, kleinere Volumina werden möglicherweise überhitzt, oder umgekehrt. Volumina, die so klein sind, dass sie nur im Bereich der Ansaugspitze der Pipettiernadel verbleiben, werden gegebenfalls auch nicht ausreichend erwärmt, weil der Bereich der Ansaugspitze häufig gar nicht beheizt ist oder weil entlang der Pipettiernadel ein Temperaturgradient besteht, und die Ansaugspitze einfach eine geringere Temperatur aufweist als der übrige Teil der Pipettiernadel.

In US 2008/0044311 A1 wird dieses Problem dadurch gelöst, dass die Temperatur der Pipettiervorrichtung an das zu transferierende Flüssigkeitsvolumen angepasst wird. Je größer das zu transferierende Flüssigkeitsvolumen ist desto stärker wird die Pipettiernadel erhitzt. Auch bei besonders kleinen Volumina wird die Pipettiernadel stärker erhitzt. Nachteilig ist bei dieser Methode, dass eine komplizierte Steuerung der Heizvorrichtung erforderlich ist und dass die Heizvorrichtung so beschaffen sein muss, dass sie in der Lage ist, die Pipettiernadel von einem Pipettierschritt zum nächsten unterschiedlich zu temperieren. Dies ist vor allem dann problematisch, wenn zunächst ein großes Flüssigkeitsvolumen pipettiert wird, welches weniger stark erwärmt werden muss und direkt anschließend ein kleineres Flüssigkeitsvolumen, dass stärker erwärmt werden muss. In diesem Fall besteht die Gefahr, dass das kleinere Volumen von der noch weniger erwärmten Pipettiernadel nicht genug erwärmt wird.

Der vorliegenden Erfindung lag daher die Aufgabe zugrunde Mittel und Verfahren bereit zu stellen, die es ermöglichen, mit einer herkömmlichen Pipettiervorrichtung, die konstant dieselbe Solltemperatur aufweist, unterschiedliche Flüssigkeitsvolumina gleichermaßen auf die gewünschte Zieltemperatur zu erwärmen.

Diese Aufgabe wird dadurch gelöst, dass mit der Pipettiernadel zuerst das gewünschte Flüssigkeitsvolumen eingesaugt wird und hinterher zusätzlich ein Luftvolumen eingesaugt wird, wodurch das Flüssigkeitsvolumen tiefer in die Pipettiernadel gelangt. Das Luftvolumen ist so gewählt, dass das Flüssigkeitsvolumen in den Bereich der beheizten Pipettiernadel gelangt, in dem der Temperatursensor angebracht ist und diesen Bereich vollständig passiert.

Die Erfindung betrifft daher ein Verfahren zum Erwärmen eines Flüssigkeitsvolumens in einer beheizten Pipettiernadel mit einer regelbaren Heizvorrichtung und einem Bereich, in dem ein Temperatursensor angebracht ist, wobei das Verfahren folgende Schritte umfasst:
a) Einsaugen des gewünschten Flüssigkeitsvolumens und dann
b) Einsaugen eines Luftvolumens,
wobei das Luftvolumen so gewählt ist, dass das Flüssigkeitsvolumen in den Bereich der beheizten Pipettiernadel gelangt, in dem der Temperatursensor angebracht ist und diesen Bereich vollständig passiert.

Es wurde festgestellt, dass das Einsaugen eines zusätzlichen Luftvolumens effizienter ist, um eine gleichmäßige Erwärmung verschiedener Flüssigkeitsvolumina zu erzielen, als beispielsweise eine Inkubation zwischen Einsaugen und Abgeben, d.h. eine verlängerte Verweildauer des zu pipettierenden Flüssigkeitsvolumens in der Pipettiernadel.

Der Temperatursensor, der die Temperatur der Pipettiernadel misst, befindet sich vorzugsweise in einem Bereich der Pipettiernadel, der möglichst jede Änderung der der Temperatur beim Ansaugen feststellt, gleichzeitig aber auch eine korrekte Einstellung der Solltemperatur über die gesamte Nadellänge sicher stellt. Typischerweise liegt dieser Bereich im vorderen Drittel der Nadel.

Der Begriff "Bereich der beheizten Pipettiernadel, in dem der Temperatursensor angebracht ist" ist so zu verstehen, dass es sich um den Abschnitt entlang der Längsachse der Pipettiernadel handelt, dessen Länge der Abmessung des Temperatursensors entspricht.

Ein weiterer Gegenstand der vorliegenden Erfindung ist eine Vorrichtung zum Pipettieren eines Flüssigkeitsvolumens, wobei die Vorrichtung folgende Komponenten umfasst:
a. eine beheizbare Pipettiernadel mit einer regelbaren Heizvorrichtung und einem Bereich, in dem ein Temperatursensor angebracht ist;
b. Mittel zur Festlegung einer konstanten Solltemperatur der Pipettiernadel;
c. Mittel zur Festlegung eines gewünschten einzusaugenden Flüssigkeitsvolumens;
d. Mittel zur Festlegung eines einzusaugenden Luftvolumens, wobei das einzusaugende Luftvolumen in Abhängigkeit von dem einzusaugenden Flüssigkeitsvolumen so gewählt wird, dass das zuvor eingesaugte Flüssigkeitsvolumen in den Bereich der Pipettiernadel gelangt, in dem der Temperatursensor angebracht ist und diesen Bereich vollständig passiert.

Unter einem "Mittel zur Festlegung einer konstanten Solltemperatur der Pipettiernadel" ist ein Regler zu verstehen, der die Information über die Istwert-Temperatur der Pipettiernadel vom Thermosensor empfängt, die Istwert-Temperatur mit der festgelegten Sollwert-Temperatur vergleicht und, nur sofern die Istwert-Temperatur die festgelegte Sollwert-Temperatur unterschreitet, die Heizvorrichtung aktiviert.

Unter einem "Mittel zur Festlegung eines gewünschten einzusaugenden Flüssigkeitsvolumens" ist eine datenverarbeitende Einheit zu verstehen, die Informationen über das gewünschte einzusaugende Flüssigkeitsvolumen enthält oder empfängt und die die Pipettiervorrichtung gemäß dieser Informationen steuert, so dass diese das gewünschte Volumen einsaugt. Die Information über ein einzusaugendes Flüssigkeitsvolumen kann beispielweise als Bestandteil eines Informationspakets, das ein bestimmtes Testverfahren definiert, auf einem Speichermedium gespeichert sein.

Unter einem "Mittel zur Festlegung eines einzusaugenden Luftvolumens" ist eine datenverarbeitende Einheit zu verstehen, die Informationen über das gewünschte einzusaugende Luftvolumen enthält oder empfängt und die die Pipettiervorrichtung gemäß dieser Informationen steuert, so dass diese das gewünschte Volumen einsaugt. Die Information über ein einzusaugendes Luftvolumen kann beispielweise als Bestandteil eines Informationspakets, das ein bestimmtes Testverfahren definiert, auf einem Speichermedium gespeichert sein. Alternativ kann die Information über ein einzusaugendes Luftvolumen als Bestandteil eines Informationspakets, das jedem einzusaugenden Flüssigkeitsvolumen ein einzusaugendes Luftvolumen zuordnet, auf einem Speichermedium gespeichert sein. Das einzusaugende Luftvolumen wird in jedem Fall so gewählt, dass das zuvor eingesaugte Flüssigkeitsvolumen in den Bereich der Pipettiernadel gelangt, in dem der Temperatursensor angebracht ist und diesen Bereich vollständig passiert.

Ein weiterer Gegenstand der vorliegenden Erfindung ist ein Analysegerät zur automatischen Analyse von Proben, bevorzugt von Körperflüssigkeitsproben, umfassend eine erfindungsgemäße Vorrichtung zum Pipettieren eines Flüssigkeitsvolumens.

Bevorzugterweise umfasst ein erfindungsgemäßes Analysegerät ferner eine Vorrichtung zur Messung optischer Eigenschaften eines Reaktionsansatzes, beispielsweise ein Photometer, sowie eine Gerätesteuerung. Die Gerätesteuerung umfasst eine Datenverarbeitungsanlage (Computer) und eine Steuereinheit sowie gegebenenfalls einen Bildschirm und eine Tastatur.

Die Steuereinheit steuert die Arbeitsvorgänge der Messvorrichtung, der Pipettiervorrichtung und anderer technischer Komponenten des Geräts. Ferner speichert, verarbeitet und analysiert die Steuereinrichtung Informationen, wie z.B. die von der Messvorrichtung ermittelten Messdaten. Die Steuereinheit umfasst unter anderem eine Festplatte, auf der verschiedene Computerprogramme installiert sind, und einen Prozessor (CPU), der die installierten Computerprogramme ausführt. Ein erfindungsgemäßes Analysegerät umfasst eine Steuereinheit, bei der ein Programm auf der Festplatte installiert ist, das das erfindungsgemäße Verfahren zum Erwärmen eines Flüssigkeitsvolumens in einer beheizten Pipettiernadel steuert, indem es das gewünschte einzusaugende Flüssigkeitsvolumens und dann das einzusaugende Luftvolumen, steuert.

### FIGURENBESCHREIBUNG

**Figur 1**

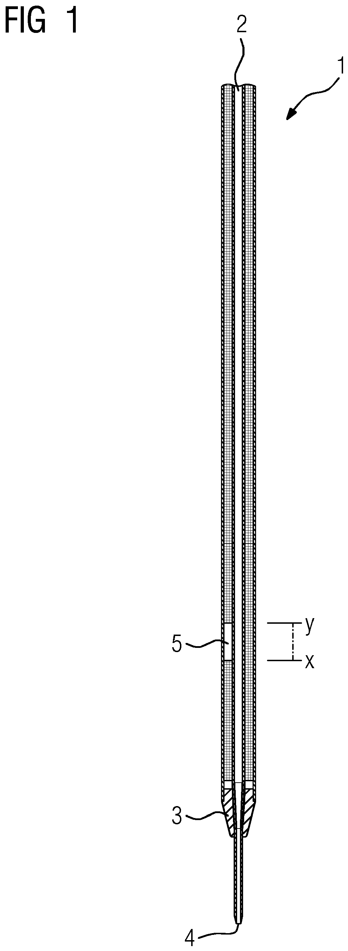

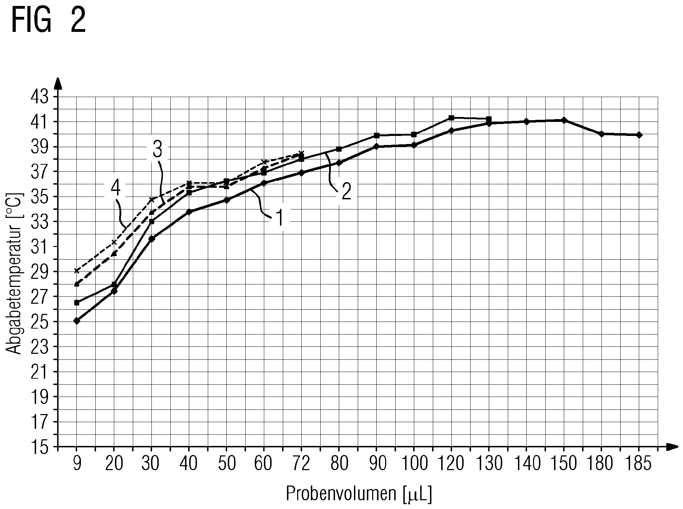

   Figur 1 zeigt eine beheizbare Pipettiernadel (1), die aus einer zylindrischen Hohlnadel aus Edelstahl besteht. Die Hohlnadel weist an einem Ende eine Öffnung (2) auf, die mit einem Ansaugsystem, z.B. mit einem Zylinder und einem darin beweglichen Kolben, verbindbar ist. Am anderen Ende weist die Hohlnadel einen konisch geformten Spitzenabschnitt (3) mit einer Öffnung (4) auf. Mit Ausnahme des konisch geformten Spitzenabschnitts (3) ist die Hohlnadel mit einem Heizdraht umwickelt. Die Hohlnadel weist einen Thermosensor (5) auf. Der Bereich der beheizten Pipettiernadel, in dem der Temperatursensor angebracht ist, reicht von x bis y und entspricht der Ausdehnung des Temperatursensors entlang der Längsachse der Pipettiernadel.
**Figur 2**
   Graphische Darstellung der gemessenen Abgabetemperaturen verschiedener Probenvolumina einer gekühlten Probenflüssigkeit nach Transfer durch eine beheizte Pipettiernadel gemäß Ausführungsbeispiel. Kurve 1: eingesaugtes Luftvolumen: 5 µL, Inkubationszeit: 0 s; Kurve 2: eingesaugtes Luftvolumen: 5 µL, Inkubationszeit: 500 ms; Kurve 3: eingesaugtes Luftvolumen: 15 µL, Inkubationszeit: 0 s; Kurve 4 (erfindungsgemäßes Verfahren): eingesaugtes Luftvolumen: 25 µL, Inkubationszeit: 0 s.

### Beispiel

Eine beheizbare Pipettiernadel, wie in Figur 1 gezeigt, wurde auf eine Solltemperatur von 41 °C eingestellt, und es wurden unterschiedliche Volumina (9-185 µL) von 6 °C kaltem Wasser als Probe aus einem gekühlten Vorratsgefäß aspiriert und in ein Vorratsgefäß abgegeben. Die Temperatur des Wassers bei Abgabe aus der Pipettiernadel wurde mit Hilfe eines Messfühlers gemessen, der waagerecht über dem Auffanggefäß angebracht war. Es wurden verschiedene Pipettierabläufe getestet, bei denen die Verweildauer der Probe (Inkubationszeit) bzw. die Menge des Luftvolumens, das nach dem Einsaugen der flüssigen Probe eingesaugt wurde, variiert wurden. Die verschiedenen Parameter sind in Tabelle 1 zusammengestellt.

**Tabelle 1**

| | **Test 1** | **Test 2** | **Test 3** | **Test 4** |
|---|---|---|---|---|
| Eingesaugtes Luftvolumen | 5 µL | 5 µL | 15 µL | 25 µL |
| Inkubationszeit | 0 | 500 ms | 0 | 0 |

Die gemessenen Abgabetemperaturen der verschiedenen pipettierten Probenvolumina sind in Figur 1 graphisch dargestellt. Je tiefer das Probenvolumen in die Hohlnadel eingesaugt wird, desto stärker wird die Probe erwärmt und die Abgabetemperatur an die Solltemperatur angenähert. Vergleicht man die Ergebnisse von Test 2 mit den Ergebnissen von den Testen 3 und 4, so wird deutlich, dass das zusätzliche Einsaugen eines ausreichend großen Luftvolumens eine effizientere Erwärmung bewirkt als eine verlängerte Verweildauer (Inkubation) des Probenvolumens in der Pipettiernadel. Das beste Ergebnis, insbesondere im Hinblick auf kleine Volumina wird erreicht, wenn das zusätzlich eingesaugte Luftvolumen so groß ist, dass das gesamte Probenvolumen den Bereich, in dem der Thermosensor angebracht ist, vollständig passiert. In der verwendeten Pipettiernadel war der Thermosensor so angebracht, dass ein Volumen von 16 µL Luft notwendig war, um ein Flüssigkeitsvolumen den Thermosensor vollständig passieren zu lassen.

## Patentansprüche

1. Verfahren zum Erwärmen eines Flüssigkeitsvolumens in einer beheizten Pipettiernadel (1) mit einer regelbaren Heizvorrichtung und einem Bereich, in dem ein Temperatursensor (5) angebracht ist, wobei das Verfahren folgende Schritte umfasst:
a) Einsaugen des gewünschten Flüssigkeitsvolumens und dann
b) Einsaugen eines Luftvolumens,
**dadurch gekennzeichnet, dass**
das Luftvolumen so gewählt ist, dass das Flüssigkeitsvolumen in den Bereich der beheizten Pipettiernadel (1) gelangt, in dem der Temperatursensor (5) angebracht ist und diesen Bereich vollständig passiert.

2. Verfahren nach Anspruch 1, wobei die Pipettiernadel (1) eine konstante Solltemperatur aufweist.

3. Verfahren nach Anspruch 2, wobei der Temperatursensor (5) nur bei Unterschreitung der Solltemperatur die Heizvorrichtung aktiviert.

4. Verfahren nach einem der vorherigen Ansprüche, wobei das Verfahren ferner folgenden Schritt umfasst:
c) Abgabe des eingesaugten Luft- und Flüssigkeitsvolumens, wobei zwischen Einsaugen und Abgabe keine zusätzliche Inkubation des Luft- und Flüssigkeitsvolumens in der Pipettiernadel vorgenommen wird.

5. Vorrichtung zum Pipettieren eines Flüssigkeitsvolumens, wobei die Vorrichtung folgende Komponenten umfasst:
a) eine beheizbare Pipettiernadel (1) mit einer regelbaren Heizvorrichtung und einem Bereich, in dem ein Temperatursensor (5) angebracht ist;
b) Mittel eingerichtet zur Festlegung einer konstanten Solltemperatur der Pipettiernadel (1);
c) Mittel eingerichtet zur Festlegung eines gewünschten einzusaugenden Flüssigkeitsvolumens;
d) Mittel eingerichtet zur Festlegung eines einzusaugenden Luftvolumens, wobei das einzusaugende Luftvolumen in Abhängigkeit von dem einzusaugenden Flüssigkeitsvolumen so gewählt wird, dass das zuvor eingesaugte Flüssigkeitsvolumen in den Bereich der Pipettiernadel gelangt, in dem der Temperatursensor (5) angebracht ist und diesen Bereich vollständig passiert.

6. Analysegerät zur automatischen Analyse von Proben umfassend eine Vorrichtung gemäß Anspruch 5.

7. Analysegerät gemäß Anspruch 6, wobei das Mittel eingerichtet zur Festlegung eines gewünschten einzusaugenden Flüssigkeitsvolumens auf Basis von Informationen, die ein bestimmtes Testverfahren definieren, das gewünschte einzusaugende Flüssigkeitsvolumen festlegt.

8. Analysegerät gemäß Anspruch 6, wobei das Mittel eingerichtet zur Festlegung eines einzusaugenden Luftvolumens auf Basis von Informationen, die ein bestimmtes Testverfahren definieren, das einzusaugende Luftvolumen festlegt.

## Claims

1. Method for heating a volume of liquid in a heated pipetting needle (1) with a closed-loop controllable heating device and a region in which a temperature sensor (5) is mounted, wherein the method comprises the following steps:
a) drawing in the desired volume of liquid and then
b) drawing in a volume of air,
**characterized in that**
the volume of air is selected such that the volume of liquid reaches the region of the heated pipetting needle (1) in which the temperature sensor (5) is mounted and completely passes through this region.

2. Method according to Claim 1, wherein the pipetting needle (1) has a constant intended temperature.

3. Method according to Claim 2, wherein the temperature sensor (5) only activates the heating device if the intended temperature is undershot.

4. Method according to one of the preceding claims, wherein the method furthermore comprises the following step:
c) dispensing the drawn-in volume of air and liquid,
wherein no additional incubation of the volume of air and liquid in the pipetting needle is undertaken between drawing in and dispensing.

5. Device for pipetting a volume of liquid, wherein the device comprises the following components:
a) a heatable pipetting needle (1) with a closed-loop controllable heating device and a region in which a temperature sensor (5) is mounted;
b) means configured for setting a constant intended temperature of the pipetting needle (1);
c) means configured for setting a desired volume of liquid to be drawn in;
d) means configured for setting a volume of air to be drawn in, wherein the volume of air to be drawn in is selected dependent on the volume of liquid to be drawn in such that the previously drawn-in volume of liquid reaches the region of the pipetting needle in which the temperature sensor (5) is mounted and completely passes through this region.

6. Analysis instrument for automatically analyzing samples, comprising a device according to Claim 5.

7. Analysis instrument according to Claim 6, wherein the means configured for setting a desired volume of liquid to be drawn in sets the desired volume of liquid to be drawn in on the basis of information which defines a specific test method.

8. Analysis instrument according to Claim 6, wherein the means configured for setting a volume of air to be drawn in sets the volume of air to be drawn in on the basis of information which defines a specific test method.

## Revendications

1. Procédé de chauffage d'un volume de liquide dans une aiguille (1) de pipetage chauffée,
ayant un dispositif de chauffage réglable et une partie dans laquelle est disposée une sonde (5) de température, le procédé comprenant les stades suivants :
a) aspiration du volume de liquide souhaité, puis
b) aspiration d'un volume d'air,
**caractérisé en ce que**
le volume d'air est choisi de manière à ce que le volume de liquide arrive dans la partie de l'aiguille (1) de pipetage chauffée, dans laquelle est disposée la sonde (5) de température et passe complètement dans cette partie.

2. Procédé suivant la revendication 1, dans lequel l'aiguille (1) de pipetage a une température de consigne constante.

3. Procédé suivant la revendication 2, dans lequel la sonde (5) de température n'active le dispositif de chauffage que si l'on passe en dessous de la température de consigne.

4. Procédé suivant l'une des revendications précédentes, dans lequel le procédé comprend, en outre, le stade suivant :
c) évacuation du volume d'air et de liquide aspiré, dans lequel entre l'aspiration et l'évacuation, on n'effectue pas d'incubation supplémentaire du volume d'air et de liquide dans l'aiguille de pipetage.

5. Système de pipetage d'un volume de liquide, le système comprenant les éléments suivants :
a) une aiguille (1) de pipetage chauffable, ayant un dispositif de chauffage réglable et une partie, dans laquelle est disposée une sonde (5) de température;
b) un moyen conçu pour fixer une température de consigne constante de l'aiguille (1) de pipetage;
c) des moyens conçus pour fixer un volume souhaité de liquide à aspirer;
d) un moyen conçu pour fixer un volume d'air à aspirer, le volume d'air à aspirer étant choisi en fonction du volume de liquide à aspirer, de manière à ce que le volume de liquide aspiré auparavant arrive dans la partie de l'aiguille de pipetage, dans laquelle la sonde (5) de température est disposée et passe complètement dans cette partie.

6. Appareil d'analyse pour l'analyse automatique d'échantillons comprenant un système suivant la revendication (5).

7. Appareil d'analyse suivant la revendication 6, dans lequel le moyen conçu pour fixer un volume souhaité de liquide à aspirer fixe le volume souhaité de liquide à aspirer sur la base d'informations qui définissent un procédé de tests déterminé.

8. Appareil d'analyse suivant la revendication 6, dans lequel le moyen conçu pour fixer un volume d'air à aspirer fixe le volume d'air à aspirer sur la base d'informations qui définissent un procédé de tests déterminé.
